# DEMANDE DE BREVET EUROPEEN

(11) **EP 1 329 163 A1**
(43) Date de publication de la demande: **23.07.2003**
(21) Numéro de dépôt: 02001035.1
(22) Date de dépôt: 18.01.2002
(51) Int. Cl.: A23L 1/31, A23L 1/314, A23P 1/08, A23P 1/12, A23L 1/272, A23K 1/00, A23K 1/16

(54) **Elaboration de produits ayant un aspect roti**

(71) Demandeur: SOCIETE DES PRODUITS NESTLE S.A., 1800 Vevey (CH)
(72) Inventeur: Laborbe, Jean-Marie, 80090 Amiens (FR); Lefebvre, Frédéric, 80300 Albert (FR)

(57) **Abrégé**

Composition pour l'alimentation, notamment l'alimentation animale, comprenant un enrobage permettant d'obtenir après cuisson un aspect rôti, ledit enrobage comprenant au moins une source de pigments ou colorants et une source de protéines.

## Description

### DOMAINE DE L'INVENTION

L'invention concerne une composition alimentaire comprenant un enrobage particulier permettant, après cuisson rapide, d'obtenir des produits ayant un aspect rôti. L'invention concerne également un procédé de fabrication de ce produit.

### ÉTAT DE LA TECHNIQUE

Les méthodes et produits permettant d'obtenir des compositions brunies, dorées ou fumées se sont beaucoup développés ces dernières années avec l'apparition de nouveaux modes de cuisson, tels que le four micro-ondes ou le four vapeur, qui permettent une diminution du temps de cuisson, mais dont l'énorme inconvénient est de ne pas ou peu colorer la surface des aliments.

Une première méthode de brunissement de la viande, du poisson, etc., consiste en la vaporisation ou pulvérisation de solutions liquides colorées telles que celles décrites dans les brevets US 6,261,623 ou US 6,090,421. Mais, ces solutions contribuent seulement à donner un aspect fumé relativement uniforme et, éventuellement, le goût caractéristique des aliments fumés.

Un autre procédé de brunissement des aliments est la pyrolyse de sucre et d'amidon décrite dans les brevets US 5,292,541 et US 5,397,582. Il s'agit ici de solutions que l'on applique sur les aliments et qui après chauffage donnent un aspect et un goût fumé.

Une autre méthode utilisée pour imiter les cuissons traditionnelles est celle décrite dans le brevet US 5,756,140. Elle permet d'obtenir des aliments dorés et brillants en surface et ne consiste en fait qu'en une alternative au traditionnel badigeon à base de jaune d'oeuf.

Il existe également des agents brunissants pour la cuisson aux micro-ondes ou à la vapeur, décrits dans les brevets US 5,196,219, US 5,223,289 et 4,735,812. Ces agents sont composés d'au minimum une source d'acides aminés et d'une source de sucres réducteurs qui lors de la cuisson réalisent une réaction de Maillard. Toutes ces inventions tentent de remédier à un des défauts les plus notables de la cuisson aux micro-ondes ou à la vapeur, c'est à dire l'absence de couleur brune à la surface des aliments tels que, par exemple, la viande, le pain ou les pâtes. L'inconvénient de ces agents brunissants est qu'ils n'imitent qu'imparfaitement la cuisson au four traditionnel en colorant uniformément la surface des compositions.

La présente invention permet de pallier à ces inconvénients dans la mesure où l'on ne se contente pas de donner un aspect fumé, doré ou coloré uniforme et homogène, mais plutôt de donner un aspect rôti, tel qu'il peut être obtenu après cuisson au four traditionnel, c'est à dire un brunissement irrégulier et aléatoire à la surface de la composition, tout en utilisant des procédés de cuisson plus rapides, comme par exemple le four vapeur ou le four micro-ondes.

### RÉSUMÉ DE L'INVENTION

La présente invention concerne une composition pour l'alimentation, principalement l'alimentation animale, comprenant un enrobage particulier permettant, après cuisson, d'obtenir des produits ayant un aspect rôti. La composition de l'enrobage comprend au moins un pigment et une source de protéines. Lorsque la composition pour l'alimentation est couverte de cet enrobage particulier, elle doit être chauffée. La température de cuisson doit être suffisamment élevée pour permettre la coagulation des protéines contenues dans l'enrobage. Les protéines ainsi coagulées fixent le pigment. Cette réaction permet l'obtention de compositions ayant un aspect rôti, la surface de ces compositions est brunie de façon éparse, le pourcentage de surface rôtie pouvant être modulé par simple modification de la quantité de protéines et/ou de colorants contenue dans l'enrobage, ou simplement en faisant varier les durées et températures de cuisson.

La présente invention propose également une méthode pour préparer une émulsion, à base de protéines végétales ou animales, qui par un procédé de co-extrusion peut être couverte de cet enrobage particulier et après cuisson donner à cette émulsion un aspect rôti.
Enfin, cette invention peut concerner plus particulièrement l'alimentation animale et se présenter sous la forme de morceaux rôtis mélangés à de la sauce ou à une base, le tout étant stérilisé. Par base, on entend un mélange de viandes microbroyées et d'additifs technologiques, auxquels peuvent entre autres s'ajouter des morceaux naturels.

Le procédé de la présente invention est totalement différent de ce qui existe actuellement en ce sens que la composition alimentaire est enrobée d'un mélange comprenant au moins un colorant ou pigment et une source de protéines qui après être cuit par un système de cuisson tel que le système à air chaud, vapeur, air chaud et vapeur ou micro-ondes donne un aspect rôti à la composition. L'aspect rôti ainsi obtenu n'est pas homogène et cette irrégularité laisse l'impression d'un produit cuit au four traditionnel.

Dans le présent texte, par "viande" on entend "viande et/ou sous produit de viande", et par "poisson" on entend "poisson et/ou sous produit de poisson".

### DESCRIPTION DÉTAILLÉE DE L'INVENTION

La composition de l'enrobage selon la présente invention comprend au moins un colorant tel que, par exemple, le sucre caramélisé, le sang (congelé ou en poudre) ou les oxydes minéraux et une source de protéines, telle que, par exemple, le plasma ou le gluten. Elle peut de plus contenir des composants pris par exemple parmi les suivants: des agents épaississants tels que l'amidon, le guar, le xanthane, le carboxymethylcellulose, le sodium alginate et autres composés appartenant à ces familles; des additifs tels que le sel, le sucre et l'acide ascorbique; des agents de saveur (tels que ceux qui, par exemple, donnent une saveur rôtie à la composition); de la farine; de l'eau.

Selon un mode préféré de l'invention, le colorant peut être, notamment, du sucre caramélisé (10 à 20% du poids de l'enrobage, de préférence 14 à 16%), du sang congelé ou en poudre (5 à 10%, de préférence 7 à 8%), des oxydes minéraux (5 à 10 %, de préférence 6 à 8%), ou un mélange de ces composés.

Il est également possible d'ajouter un épaisissant ou un mélange d'épaississants , par exemple dans une proportion de 2 à 8% s'il s'agit d'amidon, 0 à 2% s'il s'agit de guar, de xanthane ou de sodium alginate, 0 à 1% dans le cas de carboxymethylcellulose.

Des agents liants ou un mélange d'agents liants peuvent ensuite entrer dans la composition de l'enrobage selon la présente invention, à hauteur par exemple de 0 à 5% lorsque la source choisise est le gluten, 0 à 10% lorsque la source d'agent liant est le plasma.

Des additifs peuvent être ajoutés, notamment 0 à 5% de sel et/ou de sucre, et/ou 0 à 1% d'acide ascorbique. L'enrobage contient généralement de la farine (25 à 35%) et de l'eau (30 à 50%).

De préférence, la source de protéines de l'enrobage est choisie parmi le plasma, le gluten ou le sang, ou un mélange de ces composés. Néanmoins, toute autre source de protéines connue de l'homme du métier peut être utilisée. Le pourcentage de protéine (en poids par rapport au poids total de l'enrobage) est de préférence compris entre 5 et 20%.

La fabrication de l'enrobage commence par le transfert des ingrédients secs dans un pétrin, lesquels sont ensuite mélangés aux autres ingrédients. Le tout est dirigé vers une trémie munie d'une pompe amenant le mélange à un émulsifieur. A cette étape, l'enrobage est pâteux. Il peut être stocké, puis acheminé vers l'outillage nécessaire pour enrober la composition alimentaire. L'enrobage pâteux est alors stocké dans une seconde trémie munie d'une pompe servant au transfert de l'enrobage au travers de l'outillage spécifique permettant l'association des deux sous-produits (enrobage-composition alimentaire à enrober).

La composition alimentaire à enrober peut être une émulsion. Dans ce cas, l'émulsion et l'enrobage peuvent être stockés dans deux trémies différentes, munies de pompes dont le débit peut être modifié par ajustement des fréquences des variateurs. Ces pompes serviront au transfert de l'enrobage et de l'émulsion à travers un outillage spécifique.

Cet outillage spécifique est pourvu de deux entrées différentes et est constitué d'une association concentrique de deux tubes de diamètre différents. L'enrobage est injecté dans le tube de diamètre supérieur afin d'enrober à la sortie du tube l'émulsion, qui, elle est injectée dans le tube central. Ce procédé peut être comparé au procédé de co-extrusion pouvant être utilisé dans le sec. La différence réside dans le fait que le produit utilisé comme fourrage dans l'industrie du sec n'est pas guidé. La veine injectée via un tube plongeant dans le produit extrudé ne se mélange pas à son enrobage.

Dans la présente invention, les deux sous-produits sont guidés pendant une certaine distance afin de garantir à la sortie de l'outillage un flux laminaire, le plus parfait possible, afin de ne pas avoir de mélange entre les deux sous-produits. La viscosité des deux sous-produits a un impact sur l'efficience d'un tel système.

Le produit ainsi préparé est transféré jusqu'à l'extrudeur. Il peut ensuite être cuit par un système air chaud, vapeur, air chaud et vapeur ou micro-ondes, par exemple, à une température et un temps de cuisson variant selon les ingrédients utilisés.

La présente invention peut s'appliquer à l'alimentation animale et se présenter sous forme de morceaux ayant un aspect rôti mélangés à une sauce ou une base.

Ces morceaux peuvent être préparés à partir d'un mélange de 55 à 85% de viandes et sous-produits de viande et/ou de poissons et sous-produits de poissons, de 10 à 25% de céréales, de 6 à 15% d'eau, lesdits morceaux étant préférentiellement préparés à partir d'un mélange de 58 à 68% de viandes et sous-produits de viande et/ou de poissons et sous-produits de poissons, 10 à 25% de céréales, de 0 à 5% (préférentiellement 2 à 5%) de protéines végétales et 5 à 14% d'eau.

L'élaboration de l'émulsion de viande suit un procédé classique décrit dans le brevet EP 668 024. Les viandes et sous-produits de viande et/ou de poissons et sous-produits de poissons sont concassés et broyés pour arriver à des morceaux ayant une taille de l'ordre de 12 mm, puis ils sont incorporés dans un mixer auquel on ajoute les ingrédients secs de la recette. Le tout est mélangé jusqu'à obtention d'une pâte homogène, puis transféré dans une trémie munie à sa base d'une pompe permettant le transfert du mélange vers l'émulsifieur. A cette étape des colorants peuvent éventuellement être ajouté à l'émulsion. L'émulsification se fait dans un émulsifieur double grille (par exemple du type Karl Schnell) à une température maximale de 15°C. L'émulsion de viande est alors stockée dans une trémie munie d'une pompe permettant le transfert de l'émulsion vers l'outillage spécifique permettant l'association spécifique des deux sous-produits (enrobage-émulsion).

Le produit ainsi préparé est par exemple transféré jusqu'à l'extrudeur. L'émulsion et son enrobage sont sous forme de plaques dont l'épaisseur et la largeur peuvent varier selon la géométrie de l'outillage utilisé.

L'ensemble émulsion-enrobage peut ensuite être cuit dans un système de cuisson en continu (par exemple système à air chaud, vapeur, air chaud et vapeur ou micro-ondes) à une température et un temps de cuisson variant selon les ingrédients utilisés. Les plaques sont ainsi figées par coagulation et sont tranchables à la sortie du dispositif de cuisson. Les protéines de l'enrobage ont également coagulé et ont piégé le pigment ou colorant contenu dans cet enrobage donnant ainsi un aspect rôti à la surface du produit. Les plaques peuvent être découpées en continu à la sortie du système de cuisson . Les morceaux peuvent être raffermis par refroidissement à une température comprise entre 10 et 40°C : le refroidissement est fait de préférence par aspersion ou immersion afin d'éviter le collage des morceaux les uns aux autres. Ces morceaux peuvent alors être cubés puis mélangés à la sauce ou la base et transféré dans des récipients. La composition peut alors, notamment, être stérilisée de manière classique à une température comprise entre 120 et 135°C pendant 20 à 100 min.

Les exemples suivants illustrent l'invention de manière non limitative.

### EXEMPLES

### Exemple 1

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'emulsion contient aussi des vitamines , sels , arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 15% de sucre caramélisé, 6% d'amidon, 1% de guar, 0.5% de carboxymethylcellulose, 30% de farine auquel on ajoute 40% d'eau et 7% de plasma jusqu'à obtention d'une solution homogène qui est alors émulsifiée, puis stockée dans une trémie munie d'une pompe qui servira par la suite au transfert de l'émulsion vers l'outillage spécifique.

L'enrobage et l'émulsion sont alors injectés dans l'outillage spécifique, constitué de deux tubes concentriques (l'émulsion est injectée dans le tube central et l'enrobage dans le tube de diamètre supérieur). Afin d'éviter un éventuel mélange entre l'émulsion et l'enrobage, les produits sont guidés sur une distance de 60 cm.

La composition est alors transférée jusqu'à l'extrudeur, puis cuite dans un four vapeur à une température de 110°C durant 2 minutes 30. A sa sortie, le produit est découpé (la forme et la taille des morceaux variant selon que la composition s'adresse aux chiens ou aux chats), mélangé à une sauce ou base, puis stérilisé de manière classique.

### Exemple 2

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'émulsion contient aussi des vitamines , sels, arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 9% de sang en poudre, 1% de guar, 1% d'alginate de sodium, 0.5% de carboxymethylcellulose, 3% de sel, 1% de sucre, 0.2% d'acide ascorbique, 28% de farine auquel on ajoute 49% d'eau et 2% de gluten et 5% de plasma.

Les mêmes procédés de fabrication que décrits précédemment sont utilisés.

### Exemple 3

On prépare l'émulsion à partir de 63% de viandes et sous-produits de viande, notamment à partir de sous-produits de volaille (principalement carcasses), et/ou de sous-produits de porc ou boeuf (principalement foie et poumons), 15% de céréales, 1.5% de protéines texturantes végétales ou animales et 15% d'eau. L'emulsion contient aussi des vitamines , sels , arômes et colorants. On émulsifie ce mélange que l'on stocke dans une trémie munie d'une pompe qui servira par la suite au transfert de l'émulsion vers l'outillage spécifique.

L'enrobage est constitué d'un mélange de 5% d'oxydes de fer, 5% d'amidon, 1% de guar, 1% de xanthane, 1% de carboxymethylcellulose, 2.5% de sucre, 30% de farine auquel on ajoute 44% d'eau, 5% de plasma et 5% de gluten.

Les mêmes procédés de fabrication que décrits précédemment sont utilisés.

## Revendications

1. Composition pour l'alimentation comprenant un enrobage permettant d'obtenir après cuisson un aspect rôti, ledit enrobage comprenant au moins les composants suivants:
(1) une source de pigments ou colorants,
(2) une source de protéines.

2. Composition selon la revendication 1 dans laquelle les pigments ou colorants représentent 5 à 20% du poids de l'enrobage.

3. Composition selon la revendication 1 ou la revendication 2 dans laquelle les protéines représentent 5 à 20% du poids de l'enrobage.

4. Composition selon l'une des revendications 1 à 3 comprenant en outre un ou des agent(s) épaississant(s), un ou des agent(s) liant(s) et/ou un ou des additifs), de la farine et de l'eau.

5. Composition selon l'une des revendications 1 à 4 selon laquelle l'humidité de l'enrobage est similaire à celle du produit enrobé.

6. Composition selon l'une des revendications 1 à 5 selon laquelle la viscosité de l'enrobage est similaire à celle du produit enrobé.

7. Composition selon l'une des revendications 1 à 6 selon laquelle le produit enrobé est un mélange de viande et/ou de poisson, de céréales et d'eau.

8. Procédé de préparation d'une composition pour l'alimentation ayant un aspect rôti après cuisson consistant à enrober un produit pour l'alimentation par un enrobage, ledit enrobage comprenant au moins une source de pigment ou colorant et une source de protéines.

9. Procédé de préparation d'une composition pour l'alimentation ayant un aspect rôti après cuisson comprenant un enrobage, **caractérisé en ce que** la température minimale de cuisson nécessaire à l'obtention d'un aspect rôti à la surface de la composition est la température à laquelle les protéines de l'enrobage coagulent.

10. Procédé selon la revendication 8 dans lequel le système de cuisson est un système à air chaud, un système à vapeur, un sytème à air chaud et vapeur ou un système micro-ondes.
